**Europäisches Patentamt**

**European Patent Office**

**Office européen des brevets**

(11) Publication number: **0 032 753**
**B1**

# (12) EUROPEAN PATENT SPECIFICATION

(45) Date of publication of patent specification: **29.08.84**

(21) Application number: **81100428.2**

(22) Date of filing: **21.01.81**

(51) Int. Cl.³: **C 08 F 14/06, C 08 F 2/44**

(54) Vinyl chloride resin composition, method for its production and composition containing it.

(30) Priority: **22.01.80 JP 6586/80**

(43) Date of publication of application:
**29.07.81 Bulletin 81/30**

(45) Publication of the grant of the patent:
**29.08.84 Bulletin 84/35**

(84) Designated Contracting States:
**BE DE FR GB IT NL**

(56) References cited:

**CHEMICAL ABSTRACTS, vol. 77, no. 22, 27th November, 1972, page 31, abstract 140927x, COLUMBUS, OHIO (US)**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Tawada, Yoshihisa**
**7-7, 2-chome, Noda Takatsuki-shi**
**Osaka-fu (JP)**
Inventor: **Yamamoto, Tetsuro**
**8-5, Nishihata-cho Takasago-cho**
**Takasago-shi Hyogo-ken (JP)**
Inventor: **Ushioda, Minoru**
**6-12, 3-chome, Mukonoso**
**Amagasaki-shi Hyogo-ken (JP)**
Inventor: **Saito, Kazuo**
**8-32, Shishigaguchi-cho**
**Nishinomiya-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

EP 0 032 753 B1

# 0 032 753

## Description

This invention relates to a talc-containing vinyl chloride type resin composition possessing high impact strength and excelling in fabricability, and to a method for the manufacture of the composition.

In recent years, studies have been started in various quarters with a view to conferring mechanical strength and thermal resistance upon thermoplastic resins by incorporation thereto of inorganic fillers. Some of these studies have already produced practical compositions. In the case of polyvinyl chloride, methods for providing the desired reinforcement by the use of glass fibers or asbestos have been suggested. When polyvinyl chloride is reinforced with a fibrous filler such as glass fibers or asbestos, however, the disadvantage is entailed that though the tensile properties in the direction of flow are enhanced, the tensile strength in the direction perpendicular to that of flow is seriously degraded and, moreover, the impact resistance specially characteristic of polyvinyl chloride is noticeably impaired. A possible alternative may be to adopt mica or talc as a filler which has the property of low anisotropy. Mica is incapable of manifesting any reinforcing property and is low in impact resistance. Talc possesses a reinforcing property but exhibits poor impact resistance. This impact resistance can be improved to some extent by selection of particle diameters of talc. Since very fine talc is required to be used, it is difficult to have the talc uniformly dispersed in the resin in the steps of blending and molding. Consequently, the produced composite suffers from uneven distribution of properties. If the composite is allowed to acquire a heightened impact resistance, the resistance is lower than the impact resistance possessed by pure polyvinyl chloride. The difficulties offered by the composite, therefore, stand in the way of practical utility of the composite.

The impact resistance of a composite containing dispersed inorganic particles can be improved by enhancing the uniformity of dispersion of inorganic particles in the matrix (polyvinyl chloride in the present invention). Since the particles of the inorganic filler are extremely small as compared with the particles of the matrix (some hundreds of micrometres in the case of a suspension polymerized polyvinyl chloride) prior to the blending, it is difficult to have the inorganic particles uniformly dispersed mechanically. If uniform dispersion is obtained by continuing the blending for a time long enough to ensure thorough mixing, such an operation is devoid of economic practicality. Ideally, dispersion of talc within polymer particles is expected to give rise to a composite which possesses high impact resistance and exhibits no appreciably high dispersion of properties even if mechanical blending is not sufficient.

Various studies have been commenced with a view to achieving polymerizations in the presence of inorganic substances. Japanese Patent Publication No. 11661/1972 discloses a method for giving to a filler having a specific surface area of not less than 1 m²/g a surface treatment with a vinyl polymer by adding to a suspension of said filler in water 0.5 to 40%, based on the filler, of vinyl monomer and polymerizing the resultant mixed system. It has been ascertained, however, that by this method, although the mixed condition of the polymer and the filler is improved, the filler particles are expelled out of the polymer particles as the polymerization proceeds and, on completion of the polymerization, absolutely no filler particles are embedded within the polymer particles. Japanese Patent Publication No. 2659/1975 discloses an invention which precludes otherwise possible decline of polymerization velocity by asbestos by a procedure comprising the steps of adding to asbestos treated with silane 5% by weight of alcoholic water and a monomer and subjecting the resultant mixed system to bulk polymerization. Japanese Patent Publication No. 33915/1975 discloses a study aimed at attaining dispersion of a stabilizer and a slidant as well as a filler in the system under polymerization. With these methods, inorganic substances will never be embedded or dispersed within polymer particles, though they may be allowed to adhere to the surface of such particles. This is because inorganic substances by nature have poor affinity for organic substances, so that even when the inorganic substances are dispersed in a monomer or monomer mixture preparatory to polymerization, they are expelled from the organic particles with the progress of polymerization. This is true also of the talc for the present invention. When polymerization is carried out by the conventional method, the talc will never be embedded within the polymer particles if it is able to adhere to their surface.

The produced composite, therefore, possesses properties (particularly impact resistance) substantially equal to those of the product obtained by mechanically mixing talc and polymer particles.

The inventors continued a diligent study in search of a method for embedding and dispersing talc within polymer particles. They have consequently found a method capable of producing polymer particles which have talc embedded and dispersed therein and which, owing to the embedment and dispersion of talc, acquire notably high impact resistance. This invention is described in detail below.

The talc used for this invention is a monoclinic mineral of a composition represented as $Mg_3(Si_4O_{10})(OH)_2$, and the talc of the grade obtained by pulverizing the ore is used. The pulverized talc particles have the shape of thin scales. The pulverization of talc for this invention may be performed by any desired method. The talc particles obtained by the pulverization, however, are desired to possess a size frequency distribution such that those having Stokes diameters exceeding 10 mm, as determined by the centrifugal sedimentation method, account for not more than 20% of the total. The pulverization, therefore, is desired to be carried out by use of a pulverizing machine (such as a machine produced by Hosokawa Iron Works and marketed under the trademark designation "Super-micron Mill") belonging to the class of impact mills. It is further desirable to produce talc particles including those of

2

Stokes diameters exceeding 10 μm in a proportion of not more than 20%, preferably 15%, by use of a wind-power classifier (such as "Microplex" made by Yasukawa Electric, "Micron Separator" made by Hosokawa Iron Works, or a cyclone type classifier).

The monomers which are usable for this invention include vinyl chloride in an independent form and a mixture of a major amount of vinyl chloride and a minor amount of a different monomer copolymerizable with vinyl chloride. Examples of such copolymerizable monomers are vinyl esters of organic acids, vinylidene chloride, vinylidene fluorochloride, symmetric dichloroethylene, acrylonitrile, methacrylonitrile, alkylacrylate esters, alkylmethacrylate esters, alkyl esters of unsaturated dibasic organic acids such as dibutyl fumarate and diethyl fumarate, unsaturated hydrocarbons, aryl compounds, conjugate and cross-linked conjugate ethylenically unsaturated compounds.

The vinyl chloride type resin composition of the present invention which is characterized by having talc embedded within polymer particles can be identified by a procedure comprising the steps of impregnating the polymer particles obtained from the aforementioned monomer with methyl methacrylate, then polymerizing the impregnated polymer particles, cutting a thin section from a sample of the resultant polymer particles with a microtome, and observing the thin section under a penetrating electron microscope thereby detecting talc embedded within polymer particles.

Polyvinyl chloride is produced by polymerizing vinyl chloride monomer in conjunction with water, a dispersant and further an initiator added thereto. When this polymerization is carried out in the presence of an inorganic filler, the inorganic filler remains separate from the produced polymer particles. Even after the inorganic filler has been treated with an organic surface-treating agent, it only adheres to the surface of polymer particles and is not embedded within the polymer particles. When the polymerization is performed in the presence of untreated calcium carbonate, for example, the calcium carbonate remains separate from the produced polymer particles. This is because calcium carbonate has higher affinity for water than for organic compounds, therefore, is prevented from being dispersed within the monomer. When there is used calcium carbonate which has been treated with a fatty acid for the purpose of acquiring improved affinity for the monomer, the treated calcium carbonate is dispersed within the monomer and yet it is not embedded at all within the produced polymer particles. It only adheres partly to the surface of the polymer particles. This fact may be explained by a postulate that in spite of the enhanced affinity for the monomer, the treated calcium carbonate dispersed in the monomer is gradually expelled out of the polymer particles with the progress of polymerization. Even the talc of the present invention behaves exactly like the calcium carbonate described above when the polymerization is carried out by the conventional method, namely by placing the talc, vinyl chloride monomer, an aqueous medium, a dispersant and an initiator in an autoclave and subjecting the resultant mixed system to polymerization. In this case, the talc remains substantially separate from the produced polymer particles or only partly adheres to the surface of the polymer particles.

Primarily because of the poor affinity which inorganic substances exhibit for organic substances, it is difficult for virtually any inorganic substance to be embedded within produced polymer particles. As the result of the aforementioned diligent study, the inventors have ascertained that, by a method of their development, talc can be embedded within polymer particles and that the product having talc embedded within polymer particles enjoys noticeably improved impact resistance as compared with what is obtained by merely mixing talc and polymer particles.

The method by which the composition having talc embedded within polymer particles as contemplated by this invention is produced will now be described. One procedure involves stirring talc with vinyl chloride monomer or a mixture of a major amount of vinyl chloride and a minor amount of other vinyl monomer copolymerizable with vinyl chloride until the talc is wetted with the monomer or monomer mixture, then adding an aqueous medium and a dispersant to the resultant blend and polymerizing this blend with an initiator soluble in the monomer. The initiator soluble in the monomer may be properly treated and incorporated into the talc, or dissolved in the monomer in advance, or added to the blend immediately before the start of the polymerization. What is important for this procedure is that the talc is wetted with the monomer. Unlike other inorganic fillers, talc possesses a fair degree of affinity for organic substances and is easily wetted by the monomer. For facilitating the embedment of talc, it is desirable to limit the amount of water allowed to adhere to the talc particles below about 1% by weight. Ample wetting of talc should be obtained by vigorous agitation. After the addition of the aqueous medium and the dispersant, the polymerization of the mixed system is desired to be started within a short time. When the aqueous medium and the dispersant are stirred with the monomer containing the dispersed talc, the amount of talc which passes into the aqueous medium increases if the stirring which is continued until the start of the polymerization is prolonged. Therefore the amount of talc which escapes being embedded within the polymer particles increases. The talc in the aqueous medium helps to greatly reduce the size of polymer particles. The polymerization, therefore, is desired to be started within about one hour, although the duration is more or less variable with the conditions of stirring.

When the polymerization is performed using a large polymerization vessel, the elevation of temperature requires much time and the period preceding the start of polymerization is prolonged. In this case, it is good practice to have the talc wetted with and dispersed in the monomer after a compound possessing solubility in the monomer and containing a polar group has been dissolved in the monomer. When the compound containing such a polar group is added, the amount of talc which passes into the aqueous medium can be considerably decreased and the efficiency with which the embedment of talc is obtained can be enhanced even if the stirring is done after the addition of the aqueous medium and the dispersant. These desirable effects are obtained even when the stirring period up to the start of polymerization is prolonged. The polar group is desired to be that of a carboxylic acid, alcohol, amide or a derivative thereof, and it may be polymeric or nonpolymeric. Examples of the compounds possessing such polar groups which are advantageously used in this invention are polymerizable carboxylic acids such as acrylic acid, methacrylic acid, itaconic acid, maleic acid and fumaric acid and esters thereof, aliphatic carboxylic acids, aromatic carboxylic acids and esters thereof, aliphatic alcohols, and aliphatic amides. Although the amount of this compound to be used is freely selected, it is generally within the range of from 0.1 part to 10 parts, based on 100 parts of the talc. When the amount is less than 0.1 part, the effect of the addition of this compound is less than is expected. When the amount is greater than 10 parts, the added compound possibly plasticizes the polymer and imparts excessive slidability to the produced composition, though the effect of the addition may be greater. Generally, therefore, such excess addition proves disadavantageous at times.

As the initiator soluble in the monomer, any of the initiators of that description which have been in general use may be used. Among others, organic peroxides and azo compounds are frequently used. Typical examples are azo-bis-isobutyronitrile, azo-bis-dimethylvaleronitrile, azo-bis-dimethylmethoxyvaleronitrile, lauroyl peroxide, t-butyl peroxy-pivalate, diiso-propyl peroxydicarbonate and acetyl cyclohexyl-sulfonyl peroxide. The amount of the initiator is the same as has been used in the conventional method.

With a view to precluding the formation of scale and adjusting the particle size of the polymer, the dispersant is desired to be a water-soluble high polymer. Typical examples are partially saponified polyvinyl alcohol, cellulose derivatives and polyethylene oxide.

The talc content in the composition of the present invention is desired to be not more than about 50% by weight based on the amount of talc in the polymer particles. With the method of this invention, the polymerization starts on the surface of talc particles and substantially all talc is embedded within polymer particles by the time the conversion of the monomer to the polymer reaches a little below 10%. Theoretically, therefore, the composition containing a desired amount of talc within the polymer particles can be obtained. If the talc content in the polymer exceeds about 50% by weight, the formed composition is no better than what is obtained by mixing the polymer and talc. The talc content, therefore, is not desired to exceed this level.

The composition of this invention is molded after a stabilizer, a lubricant and, optionally, a pigment have been added thereto. In the course of the molding, the merits of this invention are manifested to advantage when the talc content in the composition is not more than about 30% by weight. Since the necessary talc content is variable with the particular use found for the composition, it becomes necessary to adjust the talc content by addition to the composition of an ordinary polymer containing no talc. In the production of a molded article to which a talc content of 20% by weight fits, for example, the composition of the present invention which has a talc content of 40% by weight requires addition of a substantially equal amount of a polymer containing no talc. If the composition has a talc content of 60% by weight, it becomes necessary to add thereto about twice its volume of a polymer containing no talc. In this case, it becomes difficult for the talc to be uniformly dispersed within the molded article. The produced molded article, therefore, is not much better than what is obtained from the composition having an ordinary polymer simply mixed with talc. So far as the talc content in the composition of this invention is not more than about 40% by weight, this talc content can be freely adjusted by the addition to the composition of an ordinary polymer containing no talc to produce a composition which exhibits excellent properties and moldability.

Talc has an ability to considerably promote the removal of hydrochloric acid from the vinyl chloride type resin. The polyene which is produced in consequence of this removal of hydrochloric acid seriously degrades the impact resistance of the vinyl chloride type resin containing talc. For the purpose of preventing the formation of this polyene and enhancing the impact resistance, it is advantageous to use a compound possessing an amide bond such as, for example, an alkylene-bis-fatty acid amide, methylolated fatty acid amide, a copolymer thereof having a melting point of not more than about 200°C or methoxymethylolated polyamide. When the polymer and talc are mixed, in the case of the composition of the present invention, when the particle size of the polymer is small ( <0.15 mm), the addition of such a composition in conjunction with a stabilizer and a lubricant manifests its effect to advantage. When the particle size of the polymer containing talc embedded therein increases ( <0.15 mm), the addition made even after the polymerization brings about no sufficient effect. Consequently, during the molding of the formed composition, polymer particles of a large particle size are carbonized to a point where their impact resistance decreases. In the composition of this invention, since the talc and the polymer remain in direct contact with each other, such compounds, if added after the polymerization, will not readily permeate to the interface of talc. This trend becomes conspicuous in proportion as the particle diameter of polymer increases. It is, therefore, necessary that such compounds should be added before the polymerization is ready to start. The amount of such compounds to be added is within the range of from about 0.1 to about 25% by weight, based on the talc.

The molding of the composition of this invention can be carried out by any desired method. For the composition to fit the molding, it requires incorporation of a stabilizer and a lubricant. These additives may be suitably selected from among lead type stabilizers such as tribasic lead sulfate and dibasic lead stearate, tin type stabilizers such as dioctyl tin malate and dibutyl tin malate, Ca-Zn type stabilizers, Cd-Ba type stabilizers, metallic soaps, higher fatty acids and derivatives thereof, and lubricants such as low-molecular polyethylene and normal paraffin, depending on the molding machine and the molding conditions. They are added to the composition, optionally in conjunction with an ultraviolet ray absorbent, pigment, and the like. In this case, a vinyl chloride type polymer containing no talc may be added for the adjustment of the talc content, or an impact resistance improving resin such as ABS, MBS, chlorinated polyethylene or EVA may be added for further improvement of the impact resistance. Other agents capable of improving the moldability of the composition may be similarly used. Optionally, other filler such as, for example, calcium carbonate, gypsum, gypsum fibers, asbestos, mica, calcium silicate or glass fibers may be additionally used. Particularly, additional use of a particle filler such as calcium carbonate wherein those particles having Stokes diameters exceeding 10 $\mu$m account for not more than 12% of the total particles proves to be effective in improving the impact resistance. After addition of all these additives, the composition is homogeneously mixed as by a high-speed mixer and then molded by the technique of rolling, extrusion, injection and melt spinning.

The present invention is described in detail below with reference to working examples.

### Example 1 and Comparative Example 1

Talc produced in China was pulverized and classified by a Super-micron Mill (made by Hosokawa Iron Works) and further classified by a Micron-Separator (made by Hosokawa Iron Works) to produce pulverized talc (A in Table 1) wherein those particles having Stokes diameters exceeding 10 $\mu$m accounted for 4.8% of the total particles.

In a polymerization vessel having an inner volume of 16 liters and provided with *Brumagin* type impeller one each in two steps, 1.34 kg of talc A, 13.4 g of ethylene-bis-stearylamide (EBS) as an agent for preventing removal of hydrochloric acid, and 2.03 g (0.05% by weight based on monomer) of di-2-ethylhexyl-peroxy-dicarbonate (OPP) as an initiator were kept under repeated displacement with nitrogen for removal of formed oxygen. Then 4.05 kg of vinyl chloride monomer was added to the polymerization vessel and stirred at room temperature for 20 minutes, with the impeller rotated at a speed of 1000 rpm. Subsequently, 8.3 kg of deionized water having 2.84 g (0.7% by weight based on monomer) of polyethylene oxide (PEO, molecular weight 160,000 ot 200,000) dissolved therein as a dispersant was added and the resultant mixture was stirred at the same speed, 1000 rpm, as the impellers' rotation, and immediately the temperature of the system was elevated to 58°C to start the polymerization. About five hours after the start of the polymerization, the inner pressure of the vessel fell to about 1 bar. At this point, the unaltered monomer was recovered, and the remaining polymerization mixture was dehydrated and dried at 60°C for 24 hours, to afford about 4.5 kg of a composition. From the portion of the composition having a particle size of <0.25 mm, a sample of about 2 g was collected and burnt in an electric furnace at 700°C. Consequently, the talc content of the composition was found to be 29.3% by weight.

**0 032 753**

Table 1

|  | A | B | C | D |
|---|---|---|---|---|
| >10 $\mu$m | 4.8% | 9.6 | 14.3 | 25.3 |
| 10 ~ 8 | 3.1 | 3.6 | 5.6 | 5.3 |
| 8 ~ 6 | 2.1 | 3.9 | 8.7 | 6.2 |
| 6 ~ 5 | 1.7 | 1.8 | 4.5 | 3.5 |
| 5 ~ 4 · | 3.0 | 3.6 | 6.8 | 5.4 |
| 4 ~ 3 | 4.8 | 5.7 | 7.8 | 6.4 |
| 3 ~ 2 | 9.8 | 13.3 | 11.3 | 12.8 |
| 2 ~ 1 | 26.9 | 28.8 | 19.7 | 13.1 |
| 1 ~ 0.8 | 8.5 | 5.8 | 3.6 | 3.9 |
| 0.8 ~ 0.7 | 4.4 | 2.4 | 1.6 | 2.2 |
| <0.7 | 30.9 | 21.5 | 16 | 15.9 |

(Note) Shimadzu centrifugal sedimentation type particle
size tester, Model CP—50
Solvent used — Distilled water
Dispersant used — 0.2% $(NaPO_3)_6$
Temperature — 29°C

As a Comparative Example 1, 1.34 kg of talc A, 8.3 kg of deionized water, 28.4 g of polyethylene oxide, 13.4 g of EBS and 2.03 g of OPP were placed in a 16-liter polymerization vessel and stirred at 1000 rpm under repeated displacement of nitrogen for expulsion of formed oxygen. Then 4.05 kg of vinyl chloride monomer was added thereto and the temperature of the system was immediately elevated to 58°C to start the polymerization. When the inner pressure of the vessel fell to about 1 bar five and a half hours after the start of the polymerization, the unaltered monomer was recovered, and the remaining polymerization mixture was dehydrated and dried at 60°C for 24 hours, to afford about 4.2 kg of a composition. When the portion of the composition having a particle size of <0.25 mm was tested by the same method as above, the talc content of the composition was found to be 23.1% by weight. When the talc-containing filtrate which occurred during the dehydration of the polymerization mixture was filtered and dried, there was obtained about 310 g of talc mixture. When it was tested by the same method as described above, the talc content was found to be 93%. This indicates that the filtrate was composed almost entirely of talc.

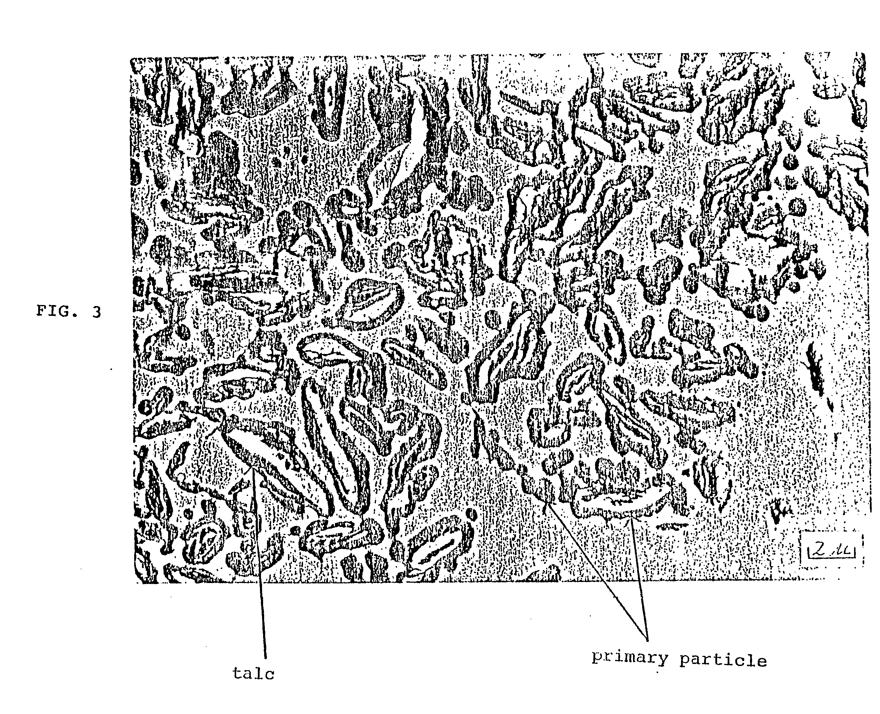

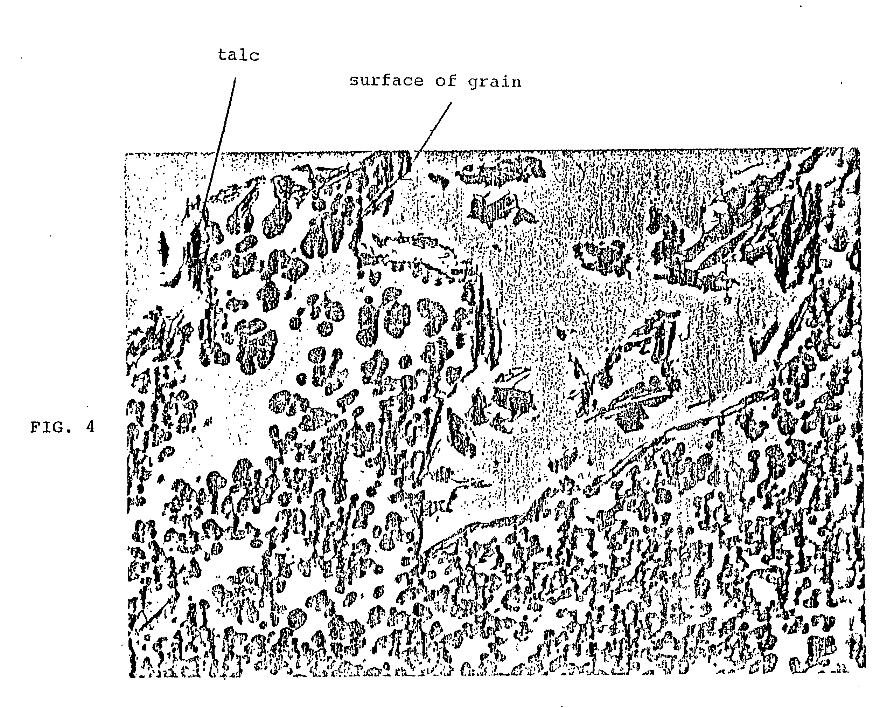

Samples of the compositions obtained in Example 1 and Comparative Example 1 were impregnated and hardened with methyl methacrylate. The thin sections cut from the hardened samples with a microtome were observed through an electron microscope. It is noted from the photomicrographs given in FIG. 3 that black lines or plates represent talc particles and gray circles represent primary particles of polyvinyl chloride formed in a manner of wrapping in talc, indicating that talc is uniformly distributed within polymer particles (grains). From FIG. 4 which illustrates a photomicrograph of the composition of Comparative Example 1, it is noted that virtually all talc remains separate from the grain and the talc is bonded to the grain through the medium of PEO used as the dispersant.

Then, the compositions were trially molded for determination of their physical properties. A mixture (hereinafter called "MB") consisting of 1 part of tribasic lead sulfate, 0.5 part of dibasic lead stearate, 1.5 parts of lead stearate, 0.5 part of calcium stearate, 0.5 part of barium stearate, 0.2 part of polyethylene wax (product of Hoechst GmbH, marketed under the trademark designation "PE-130") and 0.25 part of pigment was prepared. In a 20-liter super-mixer (made by Kawada Manufactory), 2.56 kg of the composition of this invention, 2.26 kg of Kane-vinyl S-1001 (vinyl chloride resin made by Kanegafuchi Chemical) and 180 g of MB were mixed at a low speed up to 70°C, then further mixed at an increased speed up to 110°C. The resultant blend was immediately cooled and discharged from the mixture at 70°C, to afford a compound of this invention (having a talc content of 15% by weight).

6

For referential purposes, 0.75 kg of talc A, 4.06 kg of Kane-vinyl S-1001, 180 g of MB and 7.5 g of EBS were similarly treated to afford a composition.

These compounds were molded with an extruder 40 mm in diameter (product of Tabata Machine Mfg., Model HV—40—28, *Dullmage* screw-CR = 3.2.$CR_2$ = 2.2) to produce belts 3 mm in thickness and 60 mm in width.

To determine their tensile properties, the belts were pressed to a thickness of about 2.5 mm at 180°C and dumbell test pieces specified in JIS K-6745 were cut out of the pressed belts and subjected to tests for tensile properties at 23°C. The interval between the chucks was 80 mm and the test speed was 10 mm/min.

To determine their impact strength, the belts were pressed to a thickness of about 2.5 mm, and test pieces were cut in squares of 30 mm × 30 mm from the pressed belts, mounted in a DuPont type impact tester using a dart 9.5 mm in diameter and 2 kg in weight. The height of the dart fall at which half of the test pieces were broken by the impact was found, and the value was proportionated for the dart weight of 300 g. The results are shown in Table 2.

Table 2

|  | DuPont impact $H_{50}$ (cm) | Tensile strength MPa | Tensile elongation % |
|---|---|---|---|
| Example 1— | 480 | 56,6 | >100 |
| Comparative Example 1 | 310 | 57,1 | 71 |
| Referential Example 1 | 280 | 57,6 | 63 |

The DuPont impact strength for the article of Comparative Example 1 was 310 cm, a value roughly equal to that for the article of Referential Example 1 which was obtained by simply mixing talc and polyvinyl chloride, whereas that for the article of Example 1 according to the present invention was 480 cm, a value evidently representing notable improvement in this property.

In the working example of this invention, the composition was obtained by wetting the monomer with talc and thereafter adding water thereto and polymerizing the resultant mixed system; in the comparative example, the polymerization was performed by following a conventional procedure. Owing to the difference in the manner of polymerization, the conditions of talc in the two compositions were radically different as shown in the photomicrographs and the values of impact resistance differed to the extent described above.

Examples 2, 3 and 4

By following the procedure of Example 1, 0.8 kg of talc A, 8 g of EBS and 2.3 g of OPP were placed and treated in the polymerization vessel and, with the inner atmosphere displaced with nitrogen, 4.58 kg of vinyl chloride monomer was added thereto, and the resultant mixed system was stirred at room temperature for 20 minutes, with the impeller operated at 1000 rpm. Then 8.3 kg of deionized water having 3.21 g of PEO dissolved therein was added and resultant system was polymerized, to afford 4.4 kg of a composition having a talc content of 17.9% by weight (Example 2).

Similarly, 1.08 kg of talc A, 10.8 g of EBS and 2.15 g of OPP were placed in the polymerization vessel, treated for removal of formed oxygen, then 4.3 kg of vinyl chloride monomer was added, and the resultant mixed system was stirred at room temperature for 20 minutes, with the impeller operated at 1000 rpm. Subsequently, 8.3 kg of deionized water having 3.01 g of PEO dissolved therein was added, and the resultant system was polymerized at 58°C, to afford 4.5 kg of a composition having a talc content of 23.9% by weight (Example 3).

Similarly again, 1.88 kg of talc A, 13.8 g of EBS and 1.75 g of OPP were placed in the polymerization vessel, treated for removal of formed oxygen, then 3.5 kg of vinyl chloride monomer was added, and the resultant mixed system was stirred at room temperature for 20 minutes, with the impeller operating at 1000 rpm. Subsequently, 8.3 kg of water having 2.45 g of PEO dissolved therein was added and the resultant system was polymerized, to afford 4.6 kg of a composition having a talc content of 40% by weight (Example 4).

To test for physical properties, the compositions were mixed with Kane-vinyl S-1001 in relative amounts such that the talc contents would be adjusted to 15% by weight by following the procedure of Example 1.

In Example 2, 4.19 kg of the composition, 0.63 kg of Kane-vinyl S-1001, and 180 g of MB were mixed.

In Example 3, 3.14 kg of the composition, 1.68 kg of Kane-vinyl S-1001 and 180 kg of MB were mixed.

In Example 4, 1.88 kg of the composition, 2.94 kg of Kane-vinyl S-1001 and 180 g of MB were mixed.

As in Example 1, the compositions were stirred, molded and then tested for tensile properties and DuPont impact strength. The results are shown in Table 3.

Table 3

| | DuPont impact $H_{50}$ (cm) | Tensile strength MPa | Tensile elongation % |
|---|---|---|---|
| Example 2 | >500 | 56,8 | >100 |
| Example 3 | >500 | 56,8 | >100 |
| Example 4 | 430 | 56,7 | >100 |

In Example 2 and Example 3, the values of impact strength were both greater than 500 cm, indicating that the articles had higher levels of impact strength than the article of Example 1. In Example 4, the value of impact strength was 430 cm, indicating that the articles had a slightly lower level of impact strength than the articles of Examples 1, 2 and 3. Nevertheless, this value was much greater than the values found for the articles of the aforementioned comparative example and referential example. This fact clearly suggests how effective the present invention is in the improvement of impact strength.

When the talc content of the composition increases and the molded article is required to possess a talc content of 15% by weight, it becomes necessary to increase the amount of vinyl chloride resin containing no talc to be added to the composition. In the ensuing work of mixing the composition containing talc with the resin containing no talc, the effect of the present composition is degraded in proportion to the added amount of the resin containing no talc.

This may explain the slight decline observed in the impact strength of the articles of Example 4. The trend toward the loss of impact strength becomes conspicuous in proportion as the talc content of the composition increases. Since the delcine of impact strength deprives the present invention of its expected effect, the produced composition is desired to have a talc content of not more than about 50% by weight.

Example 5

Talc produced in China was pulverized and classified in a Super-Micron mill to afford talc D of Table 1. By further classifying talc D, there were obtained talc B and talc C.

Compositions using these talcs B, C and D were produced by using the formulation of Example 1 and following the procedure of Example 1. Again by following the procedure of Example 1, compounds containing 15% by weight of different talcs were produced from the compositions, molded and tested for DuPont impact strength. The results were as shown in Table 4.

For purposes of reference, compounds containing 15% by weight of talc B, C and D respectively and also containing Kane-vinyl S-1001 were prepared similarly to Referential Example 1, and they were molded.

Table 4

| Example 5 | | Referential Example | |
|---|---|---|---|
| Talc used | DuPont impact $H_{50}$ (cm) | Talc used | DuPont impact $H_{50}$ (cm) |
| A (Example 1) | 480 | A (Referential Example 1) | 280 |
| B | 457 | B | 250 |
| C | 381 | C | 191 |
| D | 163 | D | 98 |

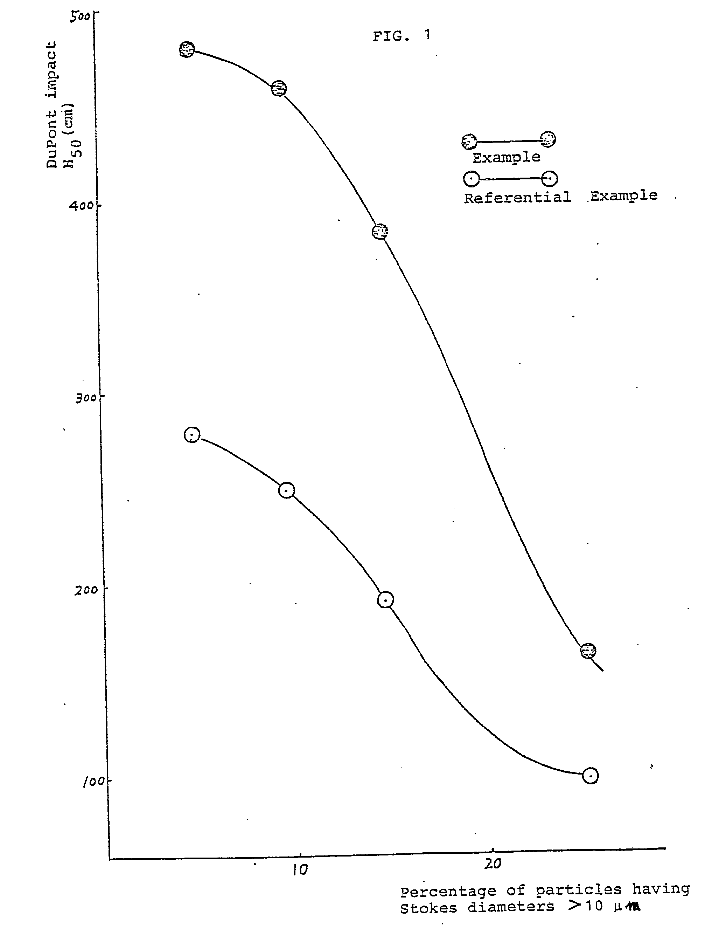

In the articles of the working example of this invention and the referential example, the values of DuPont impact strength were heavily affected by the particle diameter of talc. The graph of FIG. 1, drawn by plotting the percentage of talc particles having diameters exceeding 10 μm as the function of the value of DuPont impact strength, with the horizontal axis graduated for the former value and the vertical axis for the latter value, clearly shows that the DuPont impact strength is determined by the percentage of talc particles with diameters exceeding 10 μm.

Comparison of the results obtained for the articles of the working example of this invention with those obtained for the articles of the referential example clearly reveals the notable effect of this invention even where the percentage of talc particles of specified diameters is the same. In the working example of the invention, when the percentage of talc particles exceeding 10 μm in diameter increased over 20%, the impact strength was inferior to that obtained for the article of the referential example using talc of the grade in which particles of diameters exceeding 10 μm accounted for not more than 10% of the total. This means that the effect of the present invention becomes insignificant when the percentage rises above 20%. Thus, for the purpose of this invention, it is desirable to adopt talc having a size frequency distribution such that talc particles of diameters exceeding 10 μm account for not more than 20% of the total.

The size frequency distribution of talc was determined by measuring Stokes diameters of particles of a given sample talc at 29°C in a shimadzu centrifugal sedimentation particle size tester, Model CP-50, using 0.2% $(NaPO_3)_6$ as the dispersant and distilled water as the solvent.

Example 6

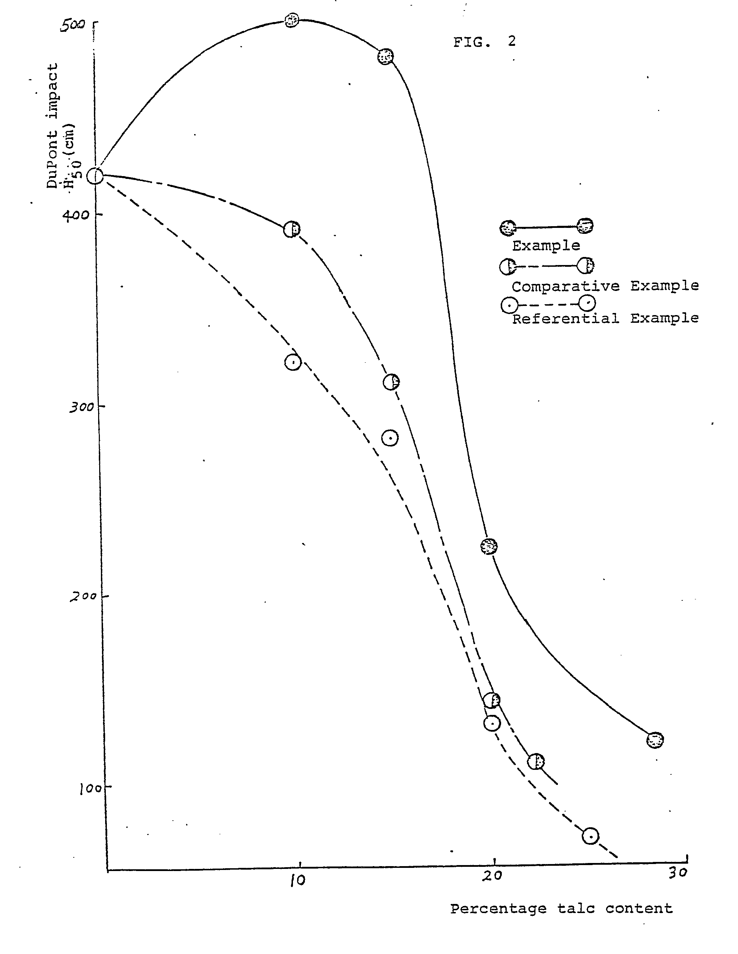

Compositions having varying indicated talc contents were prepared from the compositions obtained by the procedures of Example 1 and Comparative Example 1, molded by the method of Example 1 and then tested for DuPont impact strength. The results are shown in FIG. 2. By way of referential example, a compound having a roughly equal talc content (talc A) and containing Kane-vinyl S-1001 was molded and similarly tested. The results are additionally shown in FIG. 2.

The composition prepared were as follows.

A composition consisting of 1.71 kg of the composition of Example 1, 3.1 kg of Kane-vinyl S-1001 and 192 g of MB (talc content 10% by weight).

The composition of Example 1 (talc content 15% by weight).

A composition consisting of 3.41 kg of the composition of Example 1, 1.42 kg of Kane-vinyl S-1001 and 170 g of MB (talc content 20% by weight).

A composition consisting of 4.85 kg of the composition of Example 1 and 153 g of MB (talc content 28.4% by weight).

A composition consisting of 2.16 kg of the composition of Comparative Example 1, 2.65 kg of Kane-vinyl S-1001 and 192 g of MB (Talc content 10% by weight).

The composition of the comparative example involved in Example 1 (talc content 15% by weight).

A composition consisting of 4.33 kg of the composition of Comparative Example 1, 0.5 kg of Kane-vinyl S-1001 and 170 g of MB (talc content 20% by weight).

A composition consisting of 4.84 kg of the composition of Comparative Example 1 and 166 g of MB (talc content 22.3% by weight).

A composition consisting of 0.5 kg of talc A, 4.31 kg of Kane-vinyl S-1001 and 192 g of MB (talc content 10% by weight).

The composition of the referential example in Example 1 (talc content 15% by weight).

A composition consisting of 1.0 kg of talc A, 3.83 kg of Kane-vinyl S-1001 and 170 g of MB (talc content 20% by weight).

A composition consisting of 1.25 kg of talc A, 3.59 kg of Kane-vinyl S-1001 and 160 g of MB (talc content 25% by weight).

In the case of the articles of the comparative examples, the values of impact strength were slightly higher then the values obtained for the articles of the referential example produced by simply mixing talc with polyvinyl chloride. In the case of of the articles of the working examples of this invention, when the talc contents were below about 17 to 18% by weight, the values of impact strength were equal to or higher than the value found for pure polyvinyl chloride and, even when the talc contents exceeded 20% by weight, the values of impact strength were more than twice the values found for the articles of the comparative examples and referential examples. When the talc contents further increased, the differences narrowed down and the values of DuPont impact strength fell below 100 cm. Articles of such low value of DuPont impact strength have no practical usefulness. Thus, for the production of molded articles, the talc contents of articles are desired to be kept under about 40% by weight.

Examples 7, 8 and 9

In an autoclave having an inner volume of 16 liters, 1.3 kg of talc A, 13.4 g of EBS, 2.03 g of OPP, and 21.4 g of dibutyl malate (1.6% by weight based on talc) were placed and treated for removal of formed oxygen, then 4.05 kg of vinyl chloride monomer was added thereto and the resultant mixed system was stirred at room temperature for 20 minutes at a rate of 1000 rpm. Subsequently, 3.3 kg of deionized water having 2.84 of PEO dissolved therein was added, and the resultant system was polymerized and dried by following the procedure of Example 1, to afford 4.45 kg of a composition containing 29.7% by weight of talc (Example 7).

By repeating the procedure described above, except that dibutyl malate was replaced by 21.4 g of dibutyl phthalate, there was obtained 4.4 kg of a composition containing 30.1% by weight of talc (Example 8).

Similarly by repeating the procedure, except that 21.4 g of itaconic anhydride was used instead, there was obtained 4.52 kg of a composition containing 29.1% by weight of talc.

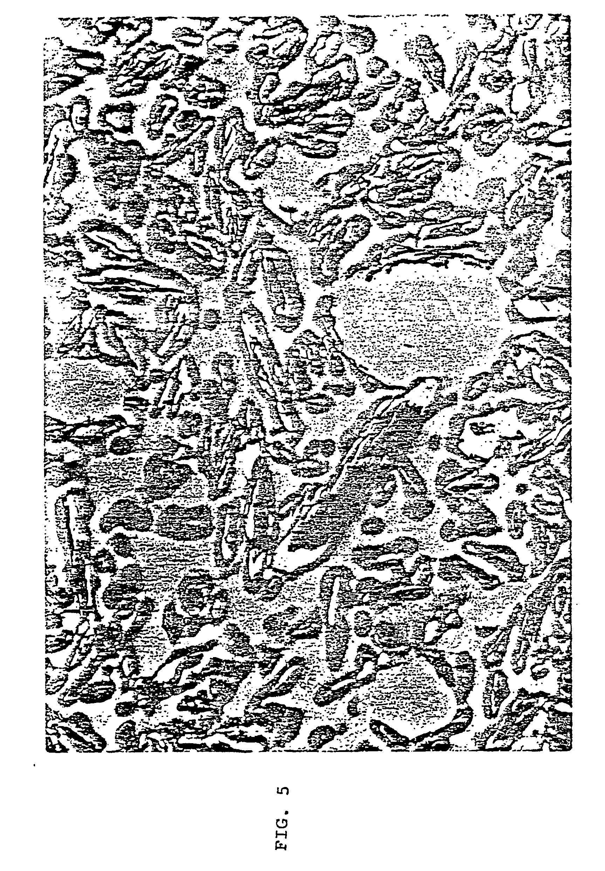

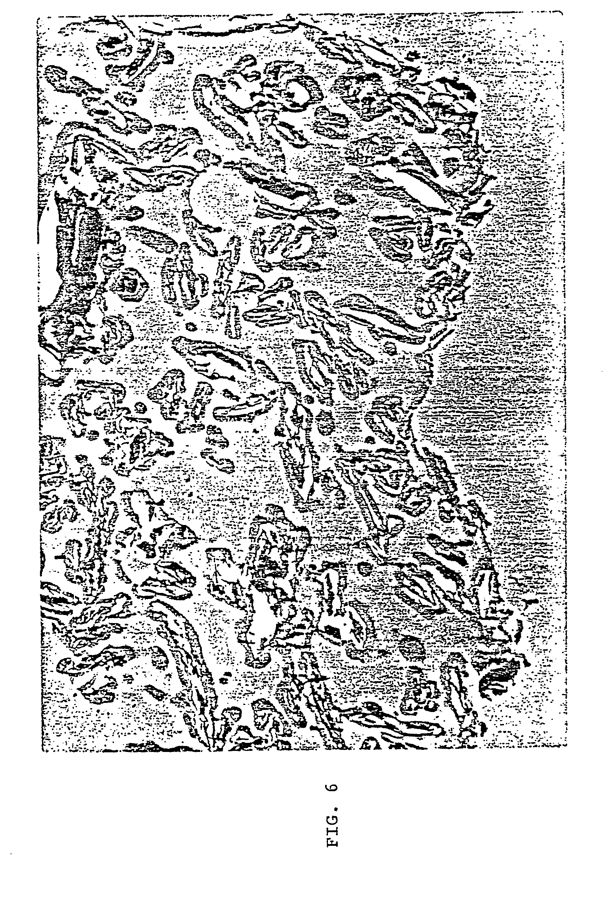

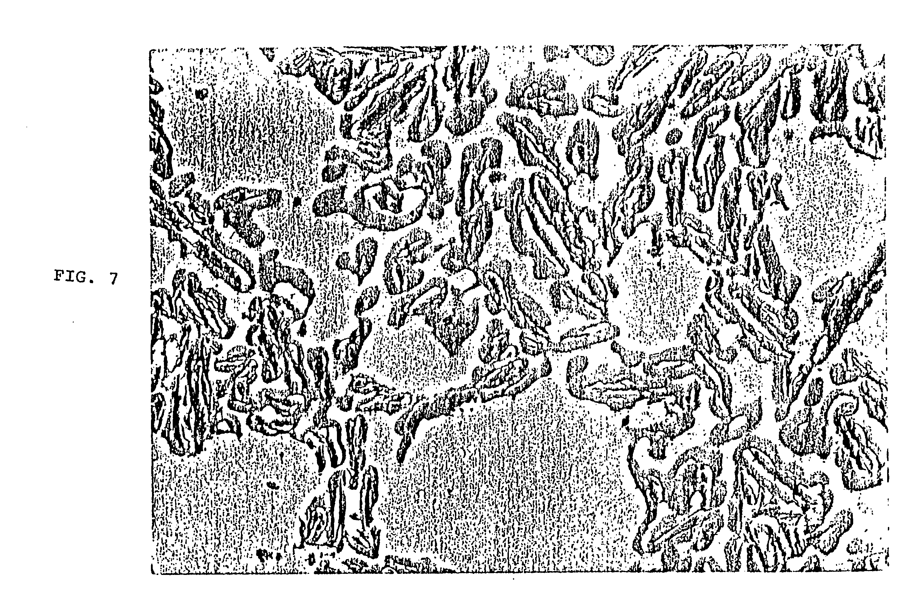

The photomicrographs of the interiors of these compositions are shown in FIG. 5, 6 and 7 respectively.

In the polymer of Example 1, although talc was dispersed inside the polymer particles (grains), talc was observed also adhering to the outside of grains. In the compositions of Examples 7, 8 and 9, talc was practically wholly embedded within grains.

This fact indicates that the addition of the aforementioned polar compounds serves to facilitate the embedment of talc within grains.

The composition of Examples 7, 8 and 9 was mixed with Kane-vinyl S-1001, similarly to Example 1, to produce compounds having a talc content of 15% by weight. These compounds were molded and tested for DuPont impact strength. The results are shown in Table 5.

Table 5

|  | DuPont impact $H_{50}$ (cm) |
| --- | --- |
| Example 7 | >500 |
| Example 8 | >500 |
| Example 9 | >500 |

For all the molded articles, the values of DuPont impact strength invariably exceeded 500 cm. This indicates that the addition of polar compounds serves to enhance the DuPont impact strength.

FIG. 1 is a graph showing the relation between the content of talc particles having Stokes diameters exceeding 10 $\mu$m and the value of DuPont impact strength (with solid circles (●) representing the results of the articles of working example and blank circles (○) those of the articles of referential example) and FIG. 2 is a graph showing the relation between the talc content in the molded article and the values of DuPont impact strength (with solid circle (●) representing the results of the articles of working example, semi-solid circle (◑) those of the articles of comparative example and blank circle (○) those of the articles of referential example).

FIG. 3, FIG. 4, FIG. 5, FIG. 6 and FIG. 7 are electron photomicrographs (4800 magnifications) of the interiors of polymer particles (grains) obtained respectively in Example 1, Comparative Example 1, Example 7, Example 8 and Example 9.

## Claims

1. A vinyl choride resin composition, characterized by having talc embedded in particles formed by polymerizing either vinyl chloride alone or a mixture comprising a major amount of vinyl chloride and a minor amount of other vinyl monomer copolymerizable with vinyl chloride.

2. The composition according to Claim 1, wherein those talc particles possessing diameters exceeding 10 $\mu$m account for not more than about 20% of the total talc particles.

3. The composition according to Claim 1 or Claim 2, wherein the talc content is not more than about 50% by weight.

4. A method for the manufacture of the vinyl chloride resin composition of Claim 1, characterized by the steps of stirring with talc either vinyl chloride monomer or a mixture of a major amount of vinyl chloride and a minor amount of other vinyl type monomer copolymerizable with vinyl chloride until the talc is wetted with said monomer or monomer mixture, then adding to the resultant blend an aqueous medium and a dispersant, and polymerizing the blend by use of an oil-soluble initiator.

5. The method according to Claim 4, wherein a compound possessing a polar group and exhibiting solubility in the monomer or monomer mixture is dissolved in the monomer or monomer mixture preparatory to the polymerization.

6. The method according to Claim 5, wherein the polar group is that of carboxylic acid, alcohol, amide or a derivative thereof.

7. The method according to Claim 4 or Claim 5, wherein the talc used therein is such that those talc particles possessing diameters exceeding 10 $\mu$m account for not more than about 20% of the total talc particles.

8. A composition containing the vinyl chloride resin according to Claim 1, in admixture with another vinyl chloride resin without talc.

**Revendications**

1. Composition de résine de chlorure de vinyle, caractérisé en ce qu'elle comporte du talc enrobé dans des particules formées par polymérisation de chlorure de vinyle seul ou d'un mélange comprenant une majeure proportion de chlorure de vinyle et une petite proportion d'autre monomère de vinyle copolymérisable avec du chlorure de vinyle.

2. Composition selon la revendication 1, caractérisée en ce que celles des particules de talc qui possèdent des diamètres supérieurs à 10 μm ne représentent pas plus de 20% environ des particules totales de talc.

3. Composition selon la revendication 1 ou la revendication 2, caractérisée en ce que le teneur en talc ne dépasse pas environ 50 % en poids.

4. Procédé de fabrication d'une composition de résine de chlorure de vinyle selon la revendication 1, caractérisé par les étapes d'agitation avec du talc du monomère de chlorure de vinyle ou d'un mélange d'une proportion majeure de chlorure de vinyle et d'une petite proportion d'un autre monomère de type vinyle copolymérisable avec du chlorure de vinyle jusqu'à ce que le talc soil mouillé par ledit monomère ou mélange de monomères, puis l'addition du mélange résultant d'un milieu aqueux et d'un dispersant et la polymérisation du mélange en utilisant un initiateur soluble dans l'huile.

5. Procédé selon la revendication 4, caractérisé en ce qu'on dissout dans le monomère ou le mélange de monomères, préalablement à la polymérisation, un composé possédant un groupe polaire et doté d'une solubilité dans le monomère ou le mélange de monomères.

6. Procédé selon la revendication 5, caractérisé en ce que le groupe polaire est celui d'un acide carboxylique, d'un alcool, d'un amide ou de leurs dérivés.

7. Procédé selon la revendication 4 ou la revendication 5, caractérisé en ce que le talc utilisé est tel que celles des particules de talc qui possèdent des diamètres supérieurs à 10 μm ne représentent pas plus de 20% des particules totales de talc.

8. Composition contentant une résine de chlorure de vinyle selon la revendication 1, en mélange avec une autre résine de chlorure de vinyle sans talc.

**Patentansprüche**

1. Eine Vinylchlorid-Harzzusammensetzung, gekennzeichnet dadurch, daß sie Talk in Teilchen eingebettet enthält, die durch Polymerisation von entweder Vinylchlorid allein oder einem Gemisch aus einer größeren Menge Vinylchlorid und einer kleineren Menge eines anderen, mit Vinylchlorid copolymerisierbaren Vinylmonomeren erhalten wurden.

2. Zusammensetzung nach Anspruch 1, wobei diejenigen Talkteilchen, die Durchmesser über 10 μm besitzen, höchstens etwa 20% der gesamten Talkteilchen ausmachen.

3. Zusammensetzung nach Anspruch 1 oder Anspruch 2, wobei der Talkgehalt höchstens etwa 50 Gewichtsprozent beträgt.

4. Verfahren zur Herstellung der Vinylchlorid-Harzzusammensetzung von Anspruch 1, gekennzeichnet dadurch, daß man mit Talk entweder monomeres Vinylchlorid oder ein Gemisch aus einer größeren Menge Vinylchlorid und einer kleineren Menge eines mit Vinylchlorid copolymerisierbaren anderen Vinylmonomeren rührt, bis das Talk mit dem Monomeren oder Monomerengemisch benetzt ist, dann das erhaltene Gemisch mit einem wäßrigen Medium und einem Dispersant versetzt und das Gemisch unter Verwendung eines öllöslichen Initiators polymerisiert.

5. Verfahren nach Anspruch 4, wobei eine Verbindung, die eine polare Gruppe aufweist und in dem Monomeren oder Monomerengemisch löslich ist, in dem Monomeren oder Monomerengemisch vor der Polymerisation gelöst wird.

6. Verfahren nach Anspruch 5, wobei die polare Gruppe diejenige einer Carbonsäure, eines Alkohols, Amids oder Derivates davon ist.

7. Verfahren nach Anspruch 4 oder Anspruch 5, wobei das Verwendete Talk derart ist, daß diejenigen Talkteilchen, die Durchmesser über 10 μm aufweisen, nicht mehr als etwa 20% der gesamten Talkteilchen ausmachen.

8. Eine Masse, enthaltend das Vinylchloridharz gemäß Anspruch 1 im Gemisch mit einem anderen Vinylchloridharz ohne Talk.

FIG. 1

DuPont impact H$_{50}$ (cm)

Example

Referential Example

Percentage of particles having
Stokes diameters >10 μm

0 032 753

FIG. 2

DuPont impact H$_{50}$ (cm)

Percentage talc content

Example

Comparative Example

Referential Example

2

FIG. 3

primary particle

talc

talc

surface of grain

FIG. 4

FIG. 5

0 032 753

FIG. 6

6

FIG. 7